# EUROPEAN PATENT SPECIFICATION

(11) **EP 2 258 907 B1**
(45) Date of publication and mention of the grant of the patent: **15.05.2013**
(21) Application number: 10251012.0
(22) Date of filing: 29.05.2010
(51) Int. Cl.: F21V 7/00, E04D 13/03, F21S 11/00, F21V 7/09

(54) **Light pipe reflector**
Lichtröhrenreflektor
Réflecteur de conducteur de lumière

(30) Priority: 04.06.2009 GB 0909602
(43) Date of publication of application: 08.12.2010
(73) Proprietor: VKR Holding A/S, 2970 Hørsholm (DK)
(72) Inventor: Rogers, Mark, High Wycombe Buckinghamshire HP12 3SE (GB)
(74) Representative: Sales, Robert Reginald

(56) References cited:
- WO-A1-94/28349
- GB-A- 2 071 191
- US-A- 5 648 873
- US-A1- 2002 085 393
- US-A1- 2004 100 698

## Description

This invention concerns reflector arrangements for light pipes, and also light pipes incorporating such an arrangement.

Light pipe systems include a highly reflective tube or pipe that extends from a roof and ducts down to ceiling level. A light pipe works in a similar way to a fibre optic cable but only on a bigger scale to move light from one area to another. A light pipe can therefore provide natural daylight into a building.

The amount of light brought into a building by a light pipe is proportional to the amount of light entering the pipe opening at roof level. As for instance sunlight does not shine from particular directions, such as from the north in northern latitudes, it has previously been proposed to provide a reflector on the northern side of a light pipe to increase the amount of light entering into a light pipe. Previous arrangements have used a concave reflector arrangement.

With such reflectors the requirements are to increase the level of light entering on a clear day, at different times of the year. In temperate parts of the world the sun always shines at an angle of less than 90° to the horizon. For instance in the United Kingdom, the solar altitude of the sun in the summer is approximately 58°, whilst this drops to approximately 11 ° in mid winter. With such an altitude it is clear a significant quantity of light would pass over the top of a light pipe and particularly in winter without an effective reflector.

The effectiveness of a reflector is determined by a number of features. For instance the area of the reflector exposed on a plane directly perpendicular to the direction of the sun. Also the angle of the reflector must be inclined relative to the horizon to direct low instant light into the light pipe. It is also worth noting that light directed at a steeper angle into the light pipe will suffer less loss of efficiency though reflectance whilst passing along the light pipe. Whilst increasing the angle of light relative to the horizon, it is important to ensure that light is directed into the light pipe rather than away from it.

On overcast days light is emitted substantially from all areas of the sky. Light will still therefore reflect off a reflector into the light pipe, but it is also required that the reflector should block as little of the available light as possible, which otherwise would enter the light pipe.

Document WO94/28349 (D1) discloses an apparatus with a reflector, which is designed to direct light into a building or other structure, but does not disclose a reflector arrangement suitable for a cylindrical light pipe.

According to the present invention there is provided a reflector arrangement for a cylindrical light pipe to reflect sunlight into a building, the arrangement being locatable on an upper end of a cylindrical light pipe to reflect light thereinto, the arrangement including a main reflector comprising an at least generally convex reflector surface which extends upwardly and is also inclined downwardly so as to be inclined towards the upper end of a light pipe, and a pair of side reflectors, one on each side of the main reflector to reflect light onto the main reflector or directly into the light pipe, characterised in that each side reflector is concave.

The main reflector may be inclined at an angle to the vertical of between 15 and 30°, and more particularly between 20 and 25°, and may be inclined at substantially 22.5°.

The main reflector may be convex, and may have a part conical or frusto conical form which diverges upwardly. The axis of the main reflector may extend substantially vertically.

In an alternative embodiment, the main reflector may be formed of a plurality of planar panels arranged in a convex configuration.

In a still further embodiment, the main reflector includes a front face part and a pair of side face parts extending therefrom for at least part of the height of the main reflector. Each side face part may have a lesser degree of curvature than the front face part along at least part of the height of the main reflector, and perhaps a lower part of the main reflector. Each side face part may be substantially flat for at least part of the height of the main reflector.

The width of each side face part may decrease upwardly. The width of the front face part may increase upwardly. A top part of the front face part may be substantially arcuate.

The reflector arrangement may extend about the light pipe for between 100 and 200°, more particularly between 125 and 175°, especially between 140 and 160°, and substantially 150°.

The reflector arrangement may also include one or more side reflectors extending from the side of the main reflector to reflect light onto the main reflector or directly into the light pipe.

A plurality of main reflectors may be provided, which main reflectors may overlap each other.

A pair of side reflectors may be provided, one on each side of the main reflector.

The width of the or each side reflector may decrease upwardly. The or each side reflector may have a part substantially cylindrical form. The or each side reflect may be substantially coaxial with the light pipe, and the or each side reflector may extend upwards substantially from the inner edge of the light pipe.

The height of the reflector arrangement may be between 0.5 and 1.5 times the diameter of the light pipe.

The reflector arrangement may include a protective transparent cover, which cover may be made of glass, acrylic or polycarbonate. The cover may have a substantially bell shape.

The invention also provides a light pipe including a reflector assembly according to any of the preceding eleven paragraphs.

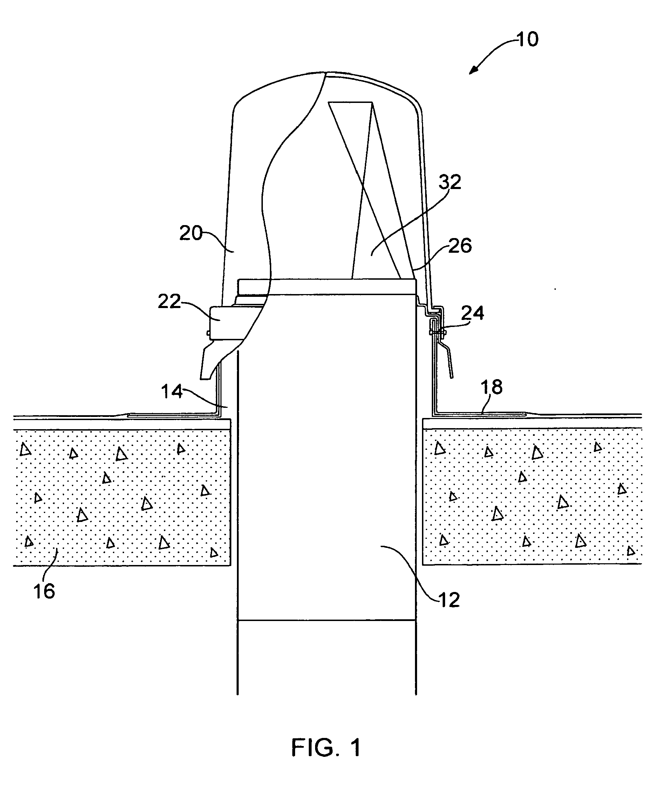

An embodiment of the present invention will now be described by way of example only and with reference to the accompanying drawings, characterised in that:-
Fig. 1 is a largely sectional view of a reflector arrangement according to the invention mounted on the upper end of a light pipe;

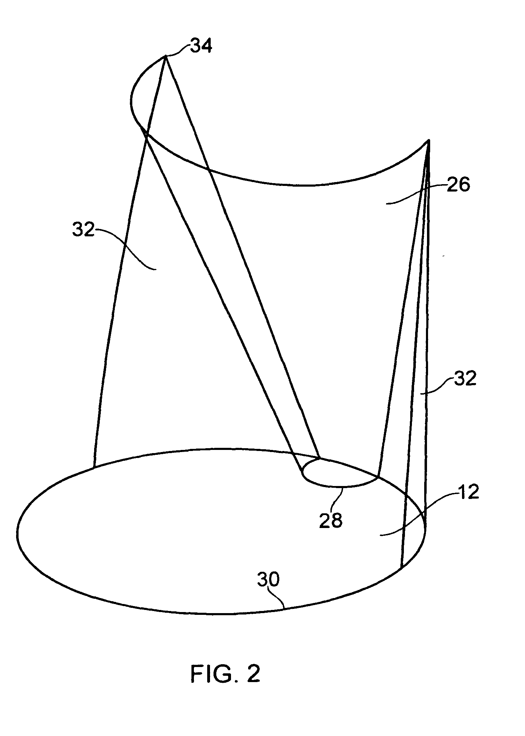

Fig. 2 is a diagrammatic perspective view of part of the arrangement of Fig. 1;
Fig. 3 is a diagrammatic side view of part of the arrangement of Fig. 1;
Fig. 4 is a diagrammatic plan view of part of the arrangement of Fig. 1; and
Fig. 5 is a graph showing comparison of the light pipe of Fig. 1 in use with and without the reflector arrangement of Fig. 1;
Fig. 6 is a similar view to Fig. 2 of a first alternative reflector arrangement;
Fig. 7 is a diagrammatic perspective view of a second alternative reflector arrangement;
Fig. 8 is a diagrammatic perspective view of part of a third alternative reflector arrangement; and
Fig. 9 is a diagrammatic plan view of the reflector arrangement of Fig. 8.

The drawings show a reflector arrangement 10 mounted on the upper end of a light pipe 12. The light pipe 12 comprises a cylindrical tube 14 of, or lined with, a highly reflective material. The tube 14 extends through a roof 16, and a flashing plate 18 is provided around the tube 14. The light pipe 12 will extend to ceiling level in a room, and a diffuser may be provided on a lower end thereof.

The reflector arrangement 10 includes a cover in the form of a bell shape glass dome 20 mounted on top of the tube 14 by a collar 22 held in place by rivets 24. The arrangement 10 also includes a main reflector 26 of a highly reflective material. The main reflector 26 is in the form of a convex part frusto conical section, which diverges upwardly. The lower end 28 of the reflector 26 rests against the inner edge 30 of the tube 14. The main reflector 26 extends upwardly and is inclined towards the centre of the tube 14 at an angle of 22.5°. The height of the main reflector 26 is approximately equal to the diameter of the tube 14.

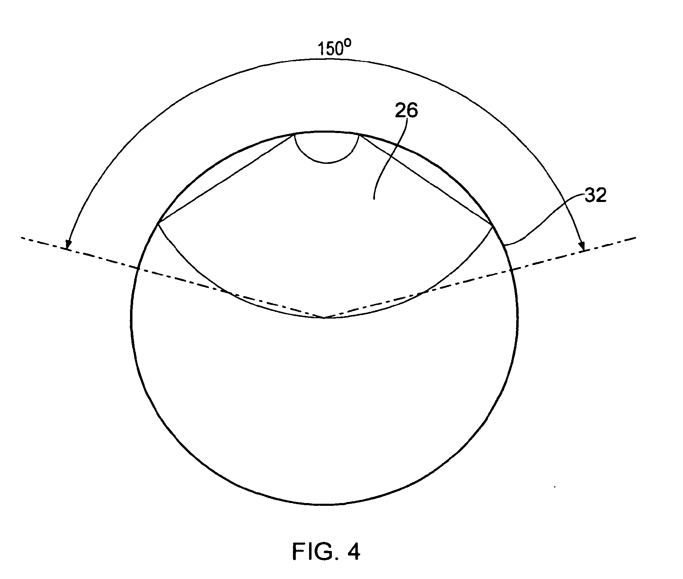

A pair of side reflectors 32 are provided one on each side of the main reflector 26. The side reflectors 32 are made of a similar highly reflective material and are both concave. The side reflectors 32 have a substantially part cylindrical form extending from the inner edge 30. The side reflectors 32 decrease in width upwardly to an apex 34 adjacent to the upper corners of the main reflector 26. The reflector arrangement 10 extends around 150° of the tube 14, as is illustrated in Fig. 4.

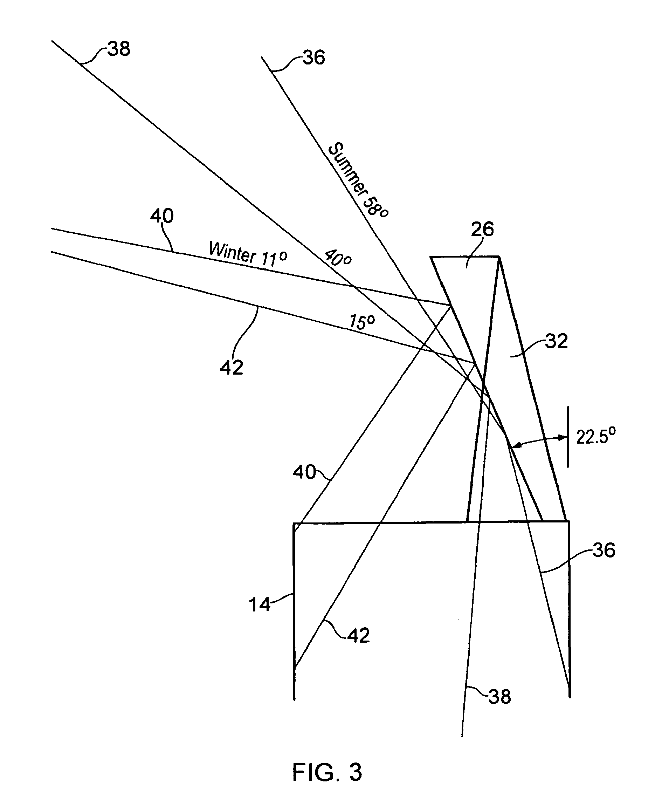

In use sunlight extending at incident angles will be reflected off the arrangement 10, and particularly the main reflector 26 into the tube 14. This is best illustrated in Fig. 3. Here direct sunlight 36 at a peak angle of 58° is reflected into the tube 14, and at an acute angle so as to provide a high proportion of light through the light pipe 12. Sunlight 38 at an incident angle of 40° is also shown being reflected into the tube 14. Low angle sunlight 40 for instance at an angle of 11° in mid winter is shown being reflected from near the top of the main reflector 26 still into the tube 14. Sunlight 42 at an angle of 15° is also being shown reflected into the tube 14.

Readings were taken over a period in the autumn in the United Kingdom. The time of the readings is indicated along with the weather conditions, and the light level received in a light pipe without the reflector arrangement 10, and an identical light pipe with the reflector arrangement 10.

| | Reading | Time | Weather Conditions | Light Level (Lux) Without Reflector | Light Level (Lux) With Reflector |
|---|---|---|---|---|---|
| 1. | 30.09.08 | 9.30am | Clear Sky | 840 | 2000 |
| 2. | 25.09.08 | 9.50am | Few Clouds | 900 | 1570 |
| 3. | 30.09.08 | 10.30am | Typical Overcast | 1020 | 1100 |
| 4. | 25.09.08 | 10.35am | Few Clouds | 1600 | 3700 |
| 5. | 22.09.08 | 11.35am | Clear Sky | 2200 | 6150 |
| 6. | 22.09.08 | 12.35pm | Clear Sky | 2200 | 6800 |
| 7. | 08.10.08 | 2.45pm | Clear Sky | 2100 | 4500 |
| 8. | 22.09.08 | 3.00pm | Fully Overcast | 260 | 270 |
| 9. | 08.10.08 | 3.00pm | Clear Sky | 1580 | 4050 |
| 10. | 08.10.08 | 3.50pm | Clear Sky | 1400 | 2500 |
| 11. | 08.10.08 | 4.25pm | Clear Sky | 860 | 1500 |
| 12. | 08.10.08 | 4.30pm | Clear Sky | 620 | 940 |

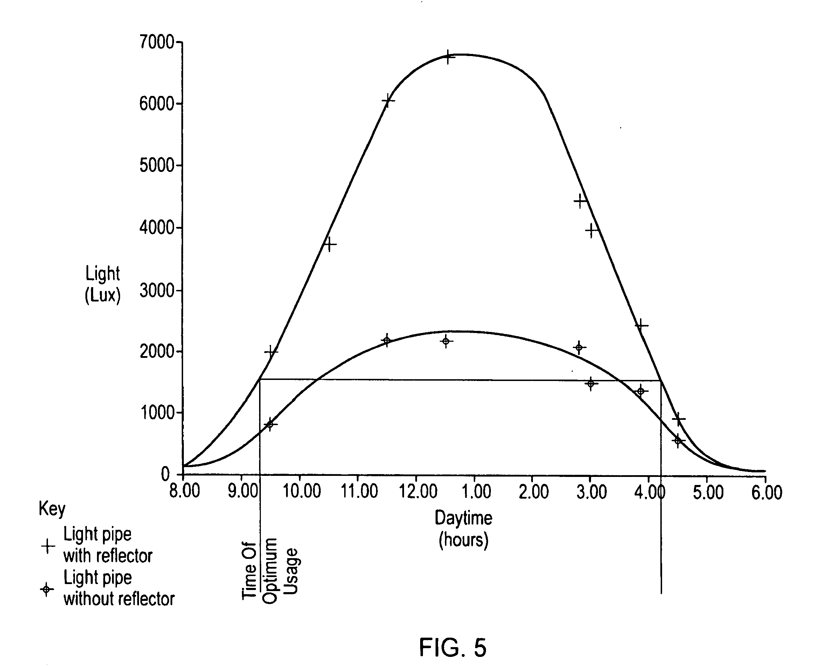

Fig. 5 is a graph reflecting the results of this table. The table and graph show that the reflector arrangement 10 performs excellently in clear weather conditions, and also performs well in all weather conditions. The arrangement 10 provided a light increase of more than 300% at a reading just after midday with a clear sky. The arrangement 10 also provided a slight improvement in performance in overcast conditions. This may be because the southern side of the sky on an overcast day is generally slightly brighter than the northern side.

The system was found to perform well for 10 hours a day, a time that is generally greater than usual office hours. At both ends of the day performance decreases due to the small effective area of the main reflector 26 in use.

The reflector arrangement 10 will generally be provided on the northern side of the light pipe 12, to reflect light from the west, south and east. For instance for office use the arrangement may be located a little towards the west to provide peak performance for instance at around 1 pm.

There is thus described a reflector arrangement for a light pipe which provides significantly enhanced performance of the light pipe. The performance is such that it will probably not be necessary to use for instance a rotating arrangement for the reflector which could significantly increase the complexity and cost of an arrangement.

This arrangement of reflector enables a greater height of reflector to be used than otherwise might be the case. Whilst providing significantly enhanced performance, the reflector arrangement is of relatively straightforward construction and can thus be inexpensively produced for long term operation.

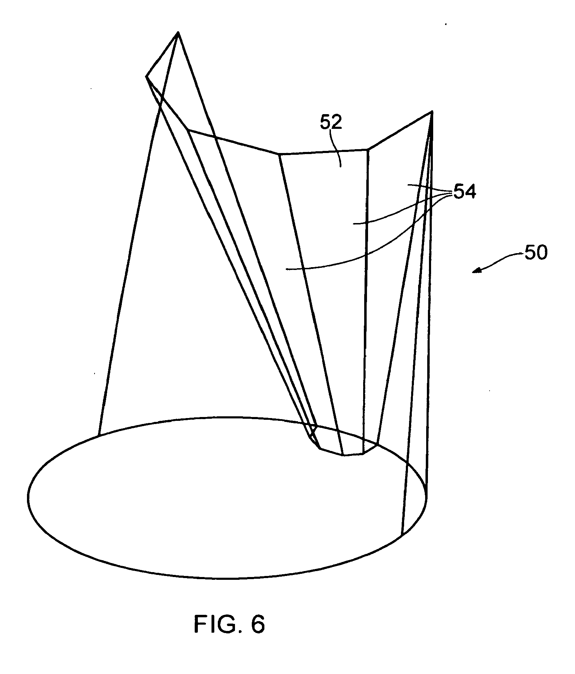

Fig. 6 shows an alternative reflector arrangement 50 which is substantially identical to the arrangement 10 except that the main reflector 52 is formed of five planar sheet members 54 which converge downwardly and are arranged in a generally convex configuration.

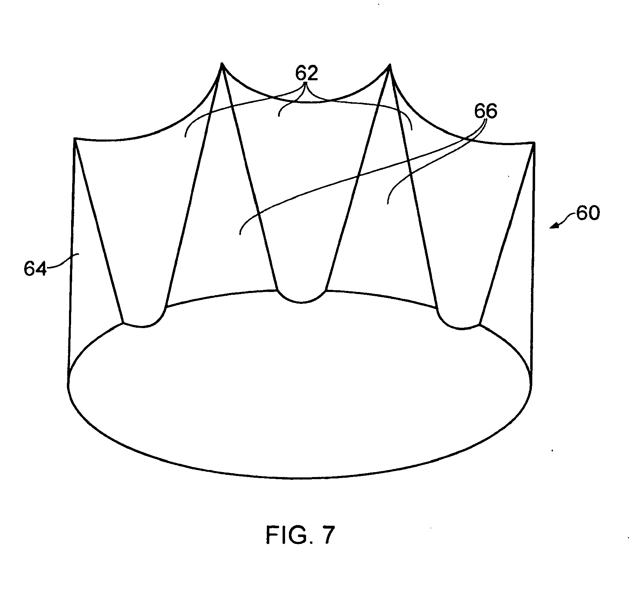

Fig. 7 shows a further alternative reflector arrangement 60. In this instance three discrete main reflectors 62 are provided. Again the reflectors 62 are of a convex part frusto conical section diverging upwardly, with the upper edges of adjacent reflectors 62 substantially meeting. Side reflectors 64 are provided outside the end two reflectors 62, and intermediate reflectors 66 are provided between the centremost and endmost main reflectors 62. In some cases it may be required for the main reflectors to overlap each other.

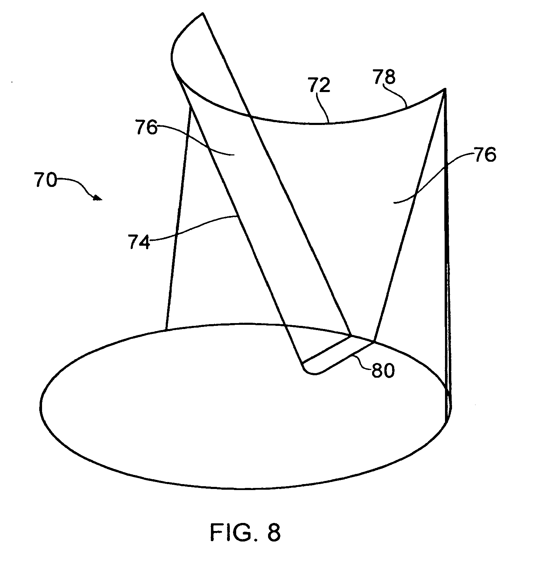

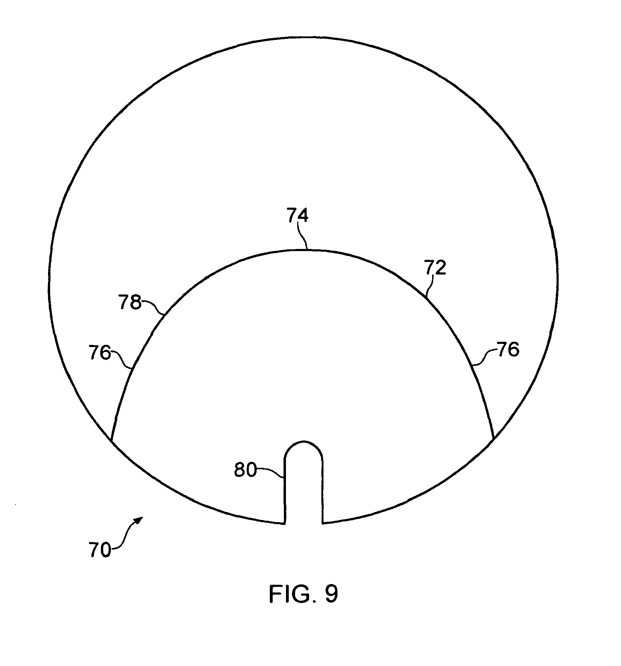

Figs. 8 and 9 show part of a third alternative reflector arrangement 70. The reflector arrangement 70 includes a single main reflector 72. Side reflectors (not shown) will also be provided, as in the arrangements 10, 50 and 60. The reflector 72 is at least partly convex, and diverges upwardly.

The main reflector 72 includes a curved front face part 74 and a pair of less curved side face parts 76 extending from either side of the front face part 74. Whilst the face of the main reflector 72 is defined in terms of separate front and side parts 74, 76, it is to be realised that this face is continuous, with no discontinuities between the respective parts.

The side face parts 76 include a substantially straight section at a lower part of the main reflector 72. The width of the front face part 74 increases upwardly, such that the front face part 74 extends across substantially the whole width of the main reflector 72 at a top end thereof to define an arcuate top end 78. Similarly, the width of the side face parts 76 decreases upwardly, such that the side face parts 76 extend across most of the width of the main reflector 72 at a lower part thereof, and converge to a point at the respective side of the top end 78 of the main reflector 72.

In use, sunlight extending at incident angles will be reflected off the main reflector 72 into the tube 14, as described above in reference to the reflector arrangements 10, 50 and 60. The arrangement 70 is positioned in use such that the front face part 74 is generally perpendicular to the incident sunlight at midday. As a result of the relatively high degree of curvature at the lower end of the main reflector 72, the front face part 74 has a relatively small area generally perpendicular to the incident sunlight. This means a smaller proportion of the light will be reflected down the tube at midday relative to the arrangements 10, 50, 60.

Either side of midday, the sunlight will be incident on the side face parts 76 of the main reflector 72. As these side face parts 76 have a lower degree of curvature, they will present a larger area generally perpendicular to the incident sunlight either side of midday, and will thus reflect a larger amount of light down the tube.

This arrangement therefore provides more consistent lighting throughout the day. The larger area of the side face parts 76 generally perpendicular to the incident sunlight either side of midday also extends the period during which the arrangement produces a useful quantity of lighting.

It is to be realised that a number of other modifications may be made without departing from the scope of the invention as defined by the claims. For instance the size, shape or inclination of the components may be altered. The cover could be differently shaped, and/or made of a different material. The above comments relating to orientation of the components relate to use in the UK. Different orientations may be applicable in other parts of the world.

## Claims

1. A reflector arrangement (10, 50, 60, 70) for a cylindrical light pipe (12) to reflect sunlight into a building, the arrangement (10, 50, 60, 70) being locatable on an upper end of a cylindrical light pipe (12) to reflect light thereinto, the arrangement (10, 50, 60, 70) including a main reflector (26, 52, 62, 72) comprising an at least generally convex reflector surface which extends upwardly and is also inclined downwardly so as to be inclined towards the upper end of a light pipe (12), and a pair of side reflectors (32), one on each side of the main reflector (26) to reflect light onto the main reflector (26, 52, 62, 72) or directly into the light pipe (12), **characterised in that** each side reflector (32) is concave

2. A reflector arrangement (10, 50, 60, 70) according to claim 1, **characterised in that** the main reflector (26, 52, 62, 72) is inclined at an angle to the vertical of between 15 and 30°, may be between 20 and 25°, and potentially substantially 22.5°.

3. A reflector arrangement (10) according to claims 1 or 2, **characterised in that** the main reflector (26) is convex, and may have a part conical or frusto conical form which diverges upwardly, and the axis of the main reflector may extend substantially vertically.

4. A reflector arrangement (70) according to claims 1 or 2, **characterised in that** the main reflector (72) includes a front face part (74) and a pair of side face parts (76) extending therefrom for at least part of the height of the main reflector (72).

5. A reflector arrangement (70) according to claim 4, **characterised in that** each side face part (76) has a lesser degree of curvature than the front face part (74) along at least part of the height of the main reflector (72), and each side face part (76) may have a lesser degree of curvature than the front face part (74) along a lower part of the main reflector (72), and each side face part (76) may be substantially flat for at least part of the height of the main reflector (72).

6. A reflector arrangement (70) according to claims 4 or 5, **characterised in that** the width of each side face part (76) decreases upwardly, the width of the front face part (74) may increase upwardly such that the front face part (74) diverges upwardly, and a top part of the front face (74) may be substantially arcuate.

7. A reflector arrangement (50) according to any of claims 1 to 3, **characterised in that** the main reflector (52) is formed of a plurality of planar panels (54) arranged in a convex configuration.

8. A reflector arrangement (10, 50, 60, 70) according to any of the preceding claims, **characterised in that** the reflector arrangement extends about the light pipe for between 100 and 200°, may be between 125 and 175°, may be between 140 and 160°, and potentially substantially 150°.

9. A reflector arrangement (60) according to any of the preceding claims, **characterised in that** a plurality of main reflectors (62) are provided, and the main reflectors (62) may overlap each other.

10. A reflector arrangement (10, 50, 60, 70) according to any of the preceding claims, **characterised in that** the width of each side reflector (32) decreases upwardly

11. A reflector arrangement (10, 50, 60, 70) according to any of the preceding claims, **characterised in that** each side reflector (32) has a part substantially cylindrical form.

12. A reflector arrangement (10, 50, 60, 70) according to any of the preceding claims, **characterised in that** each side reflector (32) is substantially coaxial with the light pipe (12), and each side reflector (32) may extend upwards substantially from the inner edge of the light pipe (12).

13. A reflector arrangement (10, 50, 60, 70) according to any of the preceding claims, **characterised in that** the height of the reflector arrangement (10, 50, 60, 70) is between 0.5 and 1.5 times the diameter of the light pipe (12).

14. A reflector arrangement (10, 50, 60, 70) according to any of the preceding claims, **characterised in that** the reflector arrangement (10, 50, 60, 70) includes a protective transparent cover (20), which cover (20) may have a substantially bell shape, and which cover (20) may be made of glass, acrylic or polycarbonate.

15. A light pipe (12), **characterised in that** the light pipe (12) includes a reflector arrangement (10, 50, 60, 70) according to any of the preceding claims.

## Patentansprüche

1. Reflektoranordnung (10, 50, 60, 70) für ein zylindrisches Lichtrohr (12) zum Reflektieren von Sonnenlicht in ein Gebäude, wobei die Anordnung an einem oberen Ende eines zylindrischen Lichtrohres (12) anordenbar ist, um Licht in dieses hinein zu reflektieren, wobei die Anordnung (10, 50, 60, 70) einen Hauptreflektor (26, 52, 62, 72) mit einer zumindest allgemein konvexen Reflektorfläche aufweist, welche sich nach oben erstreckt und auch nach unten geneigt ist, damit sie zu dem oberen Ende eines Lichtrohres (12) hin geneigt ist, sowie zwei Seitenreflektoren (32) aufweist, wovon einer an jeder Seite des Hauptreflektors (26) angeordnet ist, um Licht auf den Hauptreflektor (26, 52, 62, 72) oder direkt in das Lichtrohr (12) zu reflektieren, **dadurch gekennzeichnet, dass** jeder Seitenreflektor (32) konkav ist.

2. Reflektoranordnung (10, 50, 60, 70) nach Anspruch 1, **dadurch gekennzeichnet, dass** der Hauptreflektor (26, 52, 62, 72) in einem Winkel zur Vertikalen geneigt ist, welcher zwischen 15 und 30° liegt, zwischen 20 und 25° liegen kann und potentiell im Wesentlichen 22,5° beträgt.

3. Reflektoranordnung (10) nach Anspruch 1 oder 2, **dadurch gekennzeichnet, dass** der Hauptreflektor (26) konvex ist und eine zum Teil kegelförmige oder kegelstumpfförmige Gestalt haben kann, welche nach oben hin divergiert, und wobei die Achse des Hauptreflektors sich im Wesentlichen vertikal erstrecken kann.

4. Reflektoranordnung (70) nach Anspruch 1 oder 2, **dadurch gekennzeichnet, dass** der Hauptreflektor (72) einen Vorderflächenteil (74) und zwei Seitenflächenteile (76) enthält, welche bei mindestens einem Teil der Höhe des Hauptreflektors (72) von dem Vorderflächenteil (74) weg ragen.

5. Reflektoranordnung (70) nach Anspruch 4, **dadurch gekennzeichnet, dass** jeder Seitenflächenteil (76) entlang mindestens eines Teils der Höhe des Hauptreflektors (72) einen geringeren Krümmungsgrad als der Vorderflächenteil (74) hat, und jeder Seitenflächenteil (76) entlang eines unteren Teils des Hauptreflektors (72) einen geringeren Krümmungsgrad als der Vorderflächenteil (74) haben kann, und jeder Seitenflächenteil (76) bei mindestens einem Teil der Höhe des Hauptreflektors (72) im Wesentlichen flach sein kann.

6. Reflektoranordnung (70) nach Anspruch 4 oder 5, **dadurch gekennzeichnet, dass** die Breite jedes Seitenflächenteils (76) nach oben hin abnimmt, die Breite des Vorderflächenteils (74) nach oben hin derart zunehmen kann, dass der Vorderflächenteil (74) nach oben hin divergiert, und ein Oberteil der Vorderfläche (74) im Wesentlichen bogenförmig sein kann.

7. Reflektoranordnung (50) nach einem der Ansprüche 1 bis 3, **dadurch gekennzeichnet, dass** der Hauptreflektor (52) aus einer Vielzahl ebener Tafeln (54) gebildet ist, die in einer konvexen Konfiguration angeordnet sind.

8. Reflektoranordnung (10, 50, 60, 70) nach einem der vorhergehenden Ansprüche, **dadurch gekennzeichnet, dass** sich die Reflektoranordnung um das Lichtrohr herum in einem Winkelbereich erstreckt, welcher zwischen 100 und 200° liegt, zwischen 125 und 175° liegen kann, zwischen 140 und 160° liegen kann und potentiell im Wesentlichen 150° beträgt.

9. Reflektoranordnung (60) nach einem der vorhergehenden Ansprüche, **dadurch gekennzeichnet, dass** eine Vielzahl von Hauptreflektoren (62) vorgesehen sind, und dass die Hauptreflektoren (62) einander überlappen können.

10. Reflektoranordnung (10, 50, 60, 70) nach einem der vorhergehenden Ansprüche, **dadurch gekennzeichnet, dass** die Breite jedes Seitenreflektors (32) nach oben hin abnimmt.

11. Reflektoranordnung (10, 50, 60, 70) nach einem der vorhergehenden Ansprüche, **dadurch gekennzeichnet, dass** jeder Seitenreflektor (32) eine zum Teil im Wesentlichen zylindrische Gestalt hat.

12. Reflektoranordnung (10, 50, 60, 70) nach einem der vorhergehenden Ansprüche, **dadurch gekennzeichnet, dass** jeder Seitenreflektor (32) mit dem Lichtrohr (12) im Wesentlichen koaxial ist und jeder Seitenreflektor (32) sich im Wesentlichen von der Innenkante des Lichtrohrs (12) nach oben erstrecken kann.

13. Reflektoranordnung (10, 50, 60, 70) nach einem der vorhergehenden Ansprüche, **dadurch gekennzeichnet, dass** die Höhe der Reflektoranordnung (10, 50, 60, 70) zwischen dem 0,5- und 1,5-fachen des Durchmessers des Lichtrohrs (12) liegt.

14. Reflektoranordnung (10, 50, 60, 70) nach einem der vorhergehenden Ansprüche, **dadurch gekennzeichnet, dass** die Reflektoranordnung (10, 50, 60, 70) eine transparente Schutzabdeckung (20) enthält, welche Schutzabdeckung (20) eine im Wesentlichen glockenförmige Gestalt haben kann und welche Schutzabdeckung (20) aus Glas, Acryl oder Polycarbonat bestehen kann.

15. Lichtrohr (12), **dadurch gekennzeichnet, dass** das Lichtrohr (12) eine Reflektoranordnung (10, 50, 60, 70) gemäß einem der vorhergehenden Ansprüche enthält.

## Revendications

1. Agencement réflecteur (10, 50, 60, 70) pour qu'un conduit de lumière cylindrique (12) réfléchisse de la lumière solaire dans un bâtiment, l'agencement (10, 50, 60, 70) étant positionnable sur une extrémité supérieure d'un conduit de lumière cylindrique (12) pour réfléchir de la lumière dans celui-ci, l'agencement (10, 50, 60, 70) comprenant un réflecteur principal (26, 52, 62, 72) comprenant une surface de réflecteur au moins généralement convexe qui s'étend vers le haut et est également inclinée vers le bas afin d'être inclinée vers l'extrémité supérieure d'un conduit de lumière (12), et une paire de réflecteurs latéraux (32), un sur chaque côté du réflecteur principal (26) pour réfléchir de la lumière sur le réflecteur principal (26, 52, 62, 72) ou directement dans le conduit de lumière (12), **caractérisé en ce que** chaque réflecteur latéral (32) est concave.

2. Agencement réflecteur (10, 50, 60, 70) selon la revendication 1, **caractérisé en ce que** le réflecteur principal (26, 52, 62, 72) est incliné selon un angle par rapport à la verticale compris entre 15 et 30, qui peut être compris entre 20 et 25, et potentiellement sensiblement de 22,5°.

3. Agencement réflecteur (10) selon les revendications 1 ou 2, **caractérisé en ce que** le réflecteur principal (26) est convexe, et peut présenter une forme partiellement conique ou tronconique qui s'écarte vers le haut, et l'axe du réflecteur principal peut s'étendre de façon sensiblement verticale.

4. Agencement réflecteur (70) selon les revendications 1 ou 2, **caractérisé en ce que** le réflecteur principal (72) comprend une partie face avant (74) et une paire de parties faces latérales (76) s'étendant à partir de celle-ci sur au moins une partie de la hauteur du réflecteur principal (72).

5. Agencement réflecteur (70) selon la revendication 4, **caractérisé en ce que** chaque partie face latérale (76) présente un degré de courbure inférieur à celui de la partie face avant (74) le long d'au moins une partie de la hauteur du réflecteur principal (72), et chaque partie face latérale (76) peut présenter un degré de courbure inférieur à celui de la partie face avant (74) le long d'une partie inférieure du réflecteur principal (72), et chaque partie face latérale (76) peut être sensiblement plate sur au moins une partie de la hauteur du réflecteur principal (72).

6. Agencement réflecteur (70) selon les revendications 4 ou 5, **caractérisé en ce que** la largeur de chaque partie face latérale (76) diminue vers le haut, la largeur de la partie face avant (74) peut augmenter vers le haut de sorte que la partie face avant (74) s'écarte vers le haut, et une partie supérieure de la face avant (74) puisse être sensiblement arquée.

7. Agencement réflecteur (50) selon l'une quelconque des revendications 1 à 3, **caractérisé en ce que** le réflecteur principal (52) est formé d'une pluralité de panneaux plans (54) agencés dans une configuration convexe.

8. Agencement réflecteur (10, 50, 60, 70) selon l'une quelconque des revendications précédentes, **caractérisé en ce que** l'agencement réflecteur s'étend autour du conduit de lumière selon un angle compris entre 100 et 200, possiblement entre 125 et 175, possiblement entre 140 et 160, et potentiellement sensiblement de 150°.

9. Agencement réflecteur (60) selon l'une quelconque des revendications précédentes, **caractérisé en ce qu'**une pluralité de réflecteurs principaux (62) sont prévus, et les réflecteurs principaux (62) peuvent se chevaucher.

10. Agencement réflecteur (10, 50, 60, 70) selon l'une quelconque des revendications précédentes, **caractérisé en ce que** la largeur de chaque réflecteur latéral (32) diminue vers le haut.

11. Agencement réflecteur (10, 50, 60, 70) selon l'une quelconque des revendications précédentes, **caractérisé en ce que** chaque réflecteur latéral (32) présente une partie de forme sensiblement cylindrique.

12. Agencement réflecteur (10, 50, 60, 70) selon l'une quelconque des revendications précédentes, **caractérisé en ce que** chaque réflecteur latéral (32) est sensiblement coaxial avec le conduit de lumière (12), et chaque réflecteur latéral (32) peut s'étendre vers le haut sensiblement à partir du bord intérieur du conduit de lumière (12).

13. Agencement réflecteur (10, 50, 60, 70) selon l'une quelconque des revendications précédentes, **caractérisé en ce que** la hauteur de l'agencement réflecteur (10, 50, 60, 70) est comprise entre 0,5 et 1,5 fois le diamètre du conduit de lumière (12).

14. Agencement réflecteur (10, 50, 60, 70) selon l'une quelconque des revendications précédentes, **caractérisé en ce que** l'agencement réflecteur (10, 50, 60, 70) comprend un couvercle de protection transparent (20), lequel couvercle (20) peut présenter une forme sensiblement en cloche, et lequel couvercle (20) peut être fait de verre, d'acrylique ou de polycarbonate.

15. Conduit de lumière (12), **caractérisé en ce que** le conduit de lumière (12) comprend un agencement réflecteur (10, 50, 60, 70) selon l'une quelconque des revendications précédentes.
